**Europäisches Patentamt**

**European Patent Office**

**Office européen des brevets**

(19)

(11) Veröffentlichungsnummer : **0 252 437 B1**

(12) # EUROPÄISCHE PATENTSCHRIFT

(45) Veröffentlichungstag der Patentschrift :
08.05.91 Patentblatt 91/19

(51) Int. Cl.$^5$ : **B65F 1/14**

(21) Anmeldenummer : **87109516.2**

(22) Anmeldetag : **02.07.87**

(54) Einrichtung für Recycling-Container.

(30) Priorität : 08.07.86 DE 3622892
28.10.86 DE 3636595

(43) Veröffentlichungstag der Anmeldung :
13.01.88 Patentblatt 88/02

(45) Bekanntmachung des Hinweises auf die
Patenterteilung :
08.05.91 Patentblatt 91/19

(84) Benannte Vertragsstaaten :
AT BE CH DE ES FR GB GR IT LI NL SE

(56) Entgegenhaltungen :
DE-A- 3 009 083
FR-A- 2 509 270
FR-A- 2 546 141

(73) Patentinhaber : **Illert, Christiane**
**Mörsenbroicher Weg 179**
**W-4000 Düsseldorf 1 (DE)**

(72) Erfinder : **Illert, Christiane**
**Mörsenbroicher Weg 179**
**W-4000 Düsseldorf 1 (DE)**
Erfinder : **Cohausz, Helge B.**
**Schumannstrasse 97**
**W-4000 Düsseldorf 1 (DE)**

(74) Vertreter : **Cohausz & Florack Patentanwälte**
**Postfach 14 01 61 Schumannstrasse 97**
**W-4000 Düsseldorf 1 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Einrichtung mit Containern zur Aufnahme von verwertbaren Stoffen wie Glas, Papier, Metall mit unter der Oberfläche der Erde oder des Gehbereichs nach oben verschließbaren Räumen, in denen Container einliegen oder die die Container bilden und zu denen von oberhalb der Oberfläche angeordneten Einfüllöffnungen Schächte führen(Siehe z.B. DE-OS 30 09 083).

Es ist bekannt Container aufzustellen, in die wiederverwertbare Stoffe wie Glas, Metall oder Papier nach Stoffart getrennt eingeworfen werden. Nachdem diese gefüllt sind, werden sie von Lastkraftwagen mit angebautem Krahn angehoben und entleert. Diese bekannten Recycling-Container sind optisch nicht schön anzusehen und zerstören Gehwege und Plätze. Ferner erzeugt das Füllen und Entleeren dieser Container Geräusche, die die Anwohner stören.

Aus der DE-OS 30 09 083 ist es bekannt, Altglas-Container unterhalb der Erdoberfläche anzuordnen. Zu jedem Container führt ein Schacht, der überirdisch eine Einfüllöffnung aufweist. Diese einzelnen überirdisehen Schächte bilden einen unschönen Anblick und benötigen viel Platz.

Aufgabe der Erfindung ist es, eine Einrichtung der eingangs genannten Art so zu verbessern, daß die oberhalb der Erdoberfläche sichtbaren Bestandteile wenig Platz benötigen, optisch ansprechend und in das Straßenbild integrierbar sind, weitere Funktionen besitzen und eine einfache Entnahme der Container zum Entleeren ermöglichen.

Diese Aufgabe wird erfindungsgemäß dadurch gelöst, daß die zu diesen Containern führenden Schächte über der Oberfläche zu einem einzigen Entsorgungskörper zusammengefaßt sind, und daß die Schächte bzw. der Entsorgungskörper gegenüber den Containern verschiebbar oder verdrehbar ist bzw. sind.

Eine solche Zusammenfassung mehrerer Einfüllschächte läßt größere oberhalb der Oberfläche angeordnete Baukörper entstehen, die optisch optimal gestaltet werden können.

Da die Container unterhalb der Erdoberfläche aufgestellt werden, sind sie für die Passanten im wesentlichen nicht sichtbar. Nur die Einfüllöffnung ist für die Entsorgung sichtbar, aber diese läßt sich in optisch ansprechende Einrichtungen wie Säulen, Wandbereiche, Telefonhäuschen oder Litfaßsäulen integrieren. Es braucht nur die über dem Container liegende Abdeckung abgenommen zu werden ·um dann diesen aus dem unterirdischen Raum herauszuheben und zu entleeren. Dies bedeutet gegenüber den bisherigen Handgriffen kaum mehr Arbeit. Auch kann der Schacht aus einem anderen Material als der Container hergestellt sein.

Der Einfüllschacht kann außermittig am Container oberhalb angeordnet sein. Dies führt zu dem wesentlichen Vorteil, daß der oberhalb des Containers über die Oberfläche hervorragende Schacht besonders leicht in andere Vorrichtungen und Teile, wie oben erwähnt, integriert werden kann. Eine hohe Widerstandsfähigkeit und einfache Herstellung werden dann erreicht, wenn der Schacht am Container oben angeformt ist. Besonders vorteilhaft ist es, wenn der Entsorgungskörper als Werbesäule, Kiosk, Informationsstelle, Blumenschale und/oder Plastik gestaltet ist. Auch kann die Oberseite des aus dem unterirdischen Raum herausnehmbaren Containers die obere Öffnung des Raums verschließen.

Ausführungsbeispiele der Erfindung sind in den Zeichnungen dargestellt und werden im folgenden näher beschrieben. Es zeigen :

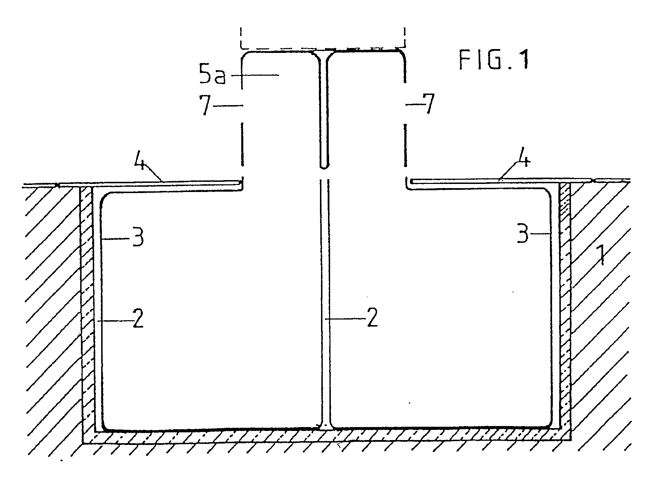

Fig. 1 einen senkrechten Schnitt durch zwei nebeneinandergestellte Recycling-Container mit oben aufgesetzten und abnehmbaren Einfüllschächten,

Fig. 2 eine Draufsicht auf zwei nebeneinandergestellte Recycling-Container mit Einfüllschächten nach Figur 1, die um eine mittlere Achse drehbar sind,

Fig. 3 eine Draufsicht auf drei nebeneinander angeordnete Recycling-Container mit drei drehbaren Einfüllschächten,

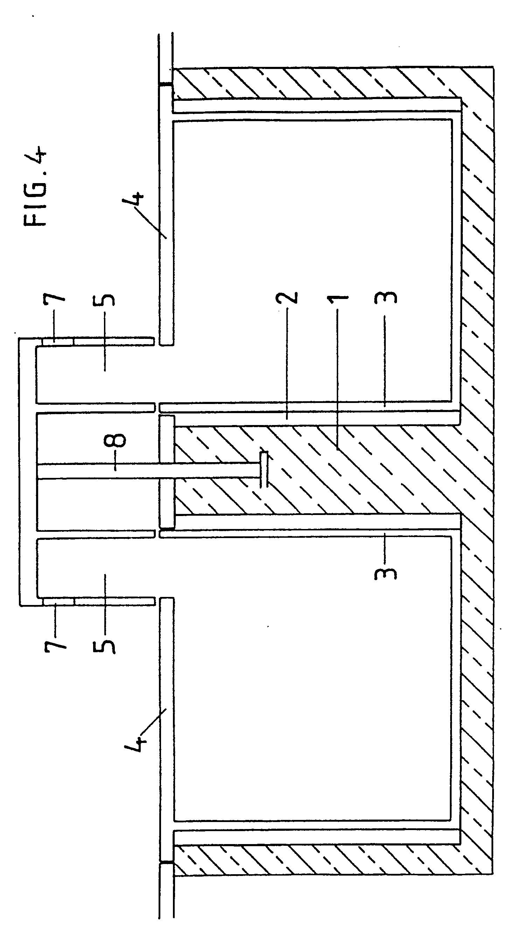

Fig. 4 einen senkrechten Schnitt durch eine Gruppe von vier Containern mit oberhalb angeordneten drehbaren Einfüllschächten,

Fig. 5 eine Draufsicht nach Figur 4 im Ausschnitt,

Fig. 6 einen senkrechten Schnitt durch den oberen Bereich einer Gruppe von drei Containern mit oben aufgesetzten, verdrehbaren Einfüllschächten,

Fig. 7 eine Draufsicht auf die Containeranlage nach Figur 6,

Fig. 8 einen senkrechten Schnitt durch den oberen Bereich einer Gruppe von zwei Containern mit oben aufgesetzten, verdrehbaren Einfüllschächten,

Fig. 9 eine Draufsicht auf die Containeranlage nach Figur 8,

Fig. 10 einen senkrechten Schnitt durch eine Gruppe von 4 Containern bzw. Gruben oder Räumen, die fest im Boden verankert sind mit verdrehbaren Einfüllschächten,

Fig. 11 eine Draufsicht auf die Containeranlage nach Figur 10.

Im Erdboden 1 ist ein nach oben offener Raum 2 ausgehoben in den ein oder mehrere Container 3 von oben einstellbar sind. Da die Höhe der Container nicht größer ist als die Tiefe des Raumes 2 ist der Container durch eine waagerechte obere Abdeckplatte 4 bis auf einen Einfüllschacht 5 zudeckbar. Der unterirdische Raum als auch die Container können einen rechteckigen, quadratischen, ovalen oder runden waagerechten Querschnitt besitzen. Am Container 3 ist der Einfüllschacht 5 außermittig befestigt, wobei eine senkrechte Seitenwand des Einfüllschachts in eine senkrechte Seitenwand des Containers übergeht.

Sind in dieser Weise zwei bis vier Container nebeneinandergestellt, bilden die Einfüllschächte 5 nahe nebeneinanderstehend eine einheitliche Vorrichtung, die durch einen Aufsatz 6 abgedeckt oder gebildet sein können. Dieser Aufsatz 6 kann eine Blumenschale oder eine Werbesäule als auch ein anderer Gegenstand sein, wie er auf Plätzen oder Gehwegen bereits Verwendung findet. In die seitliche Öffnung 7 des Einfüllschachts 5 werden die Materialien, insbesondere Glas, Metall oder Papier getrennt nach Materialart eingeworfen und nach Füllung des Containers werden die Platten 4 als auch der Aufsatz 6 abgenommen und die Container entleert.

Die Schächte bilden zusammenhängende getrennte Schachteinheit 5a, die verschonen werden kann, ehe die Container entleert werden.

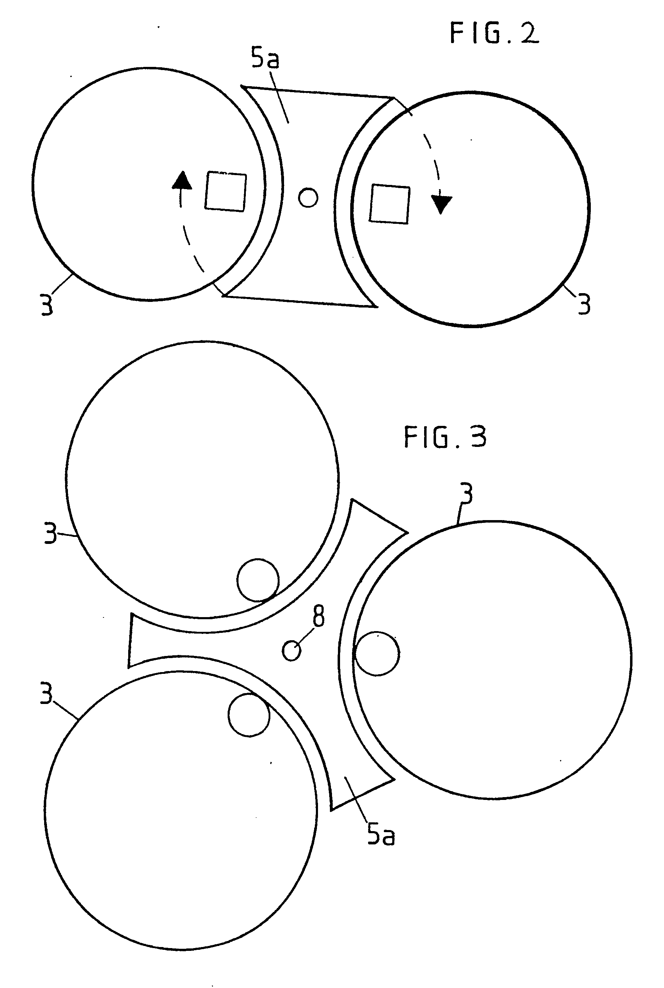

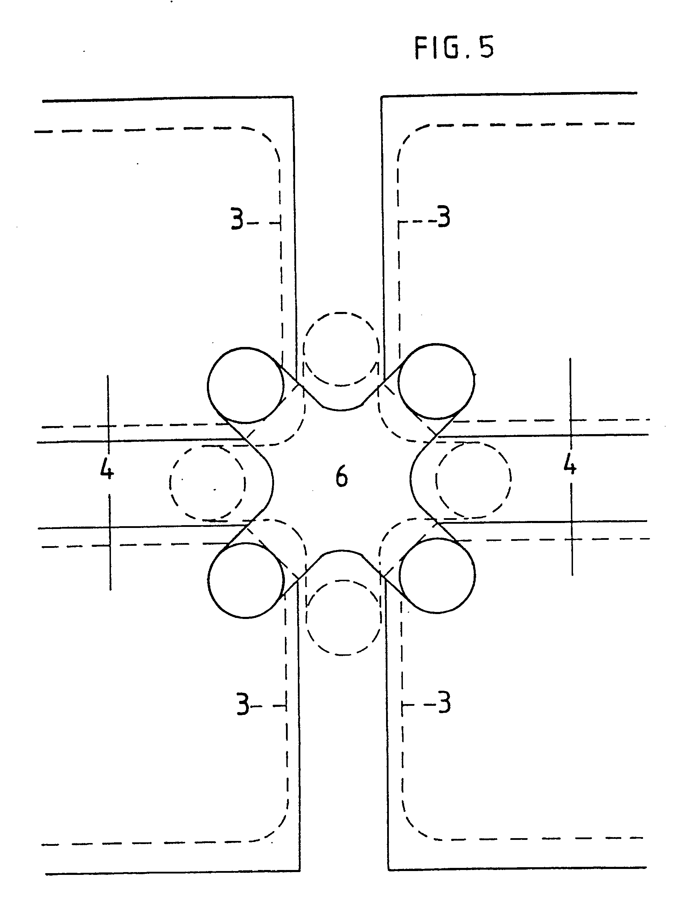

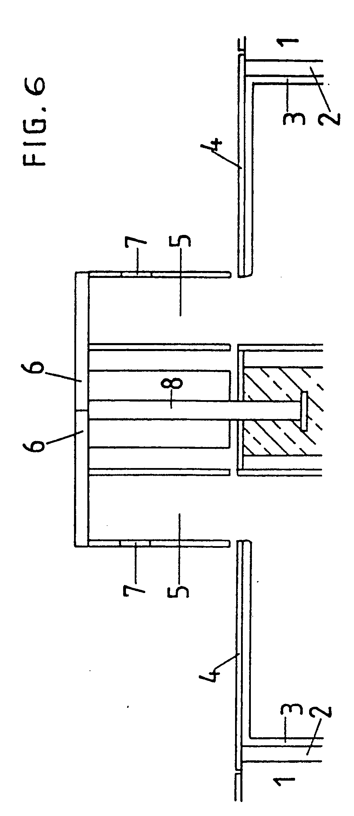

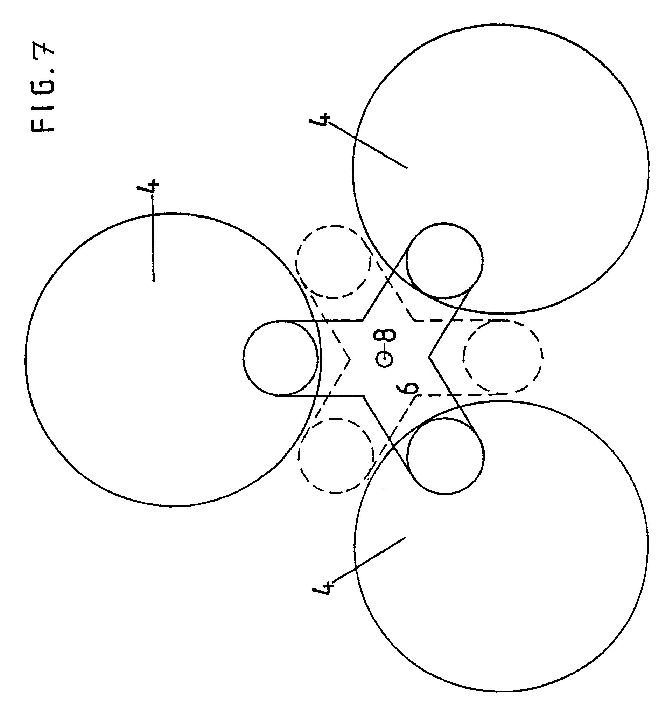

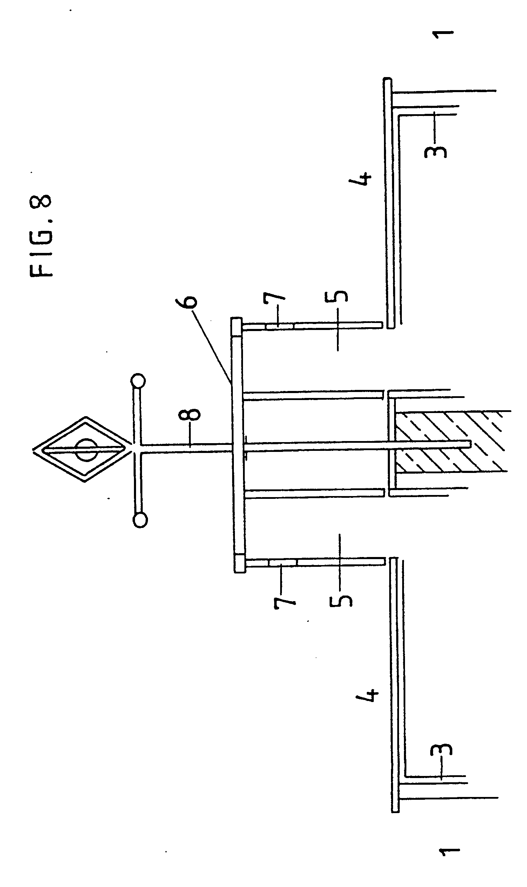

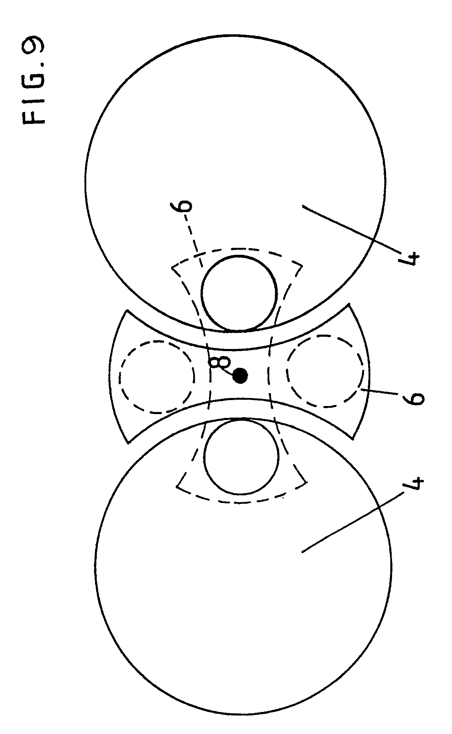

Diese Schachteinheit 5a kann aber auch während des Containerentleerens stehenbleiben und braucht dann nur wie in den Figuren 2 und 3 gezeigt ist um ihre senkrechte Mittelachse 8 verdreht zu werden um die Container hochnehmen zu können, siehe auch Figuren 5-11.

Der Behälter kann auch aus flexiblem Material, insbesondere Kunststoff bestehen. Die Reißfestigkeit kann durch ein inneres Metallgewebe erhöht werden.

Beim Ausführungsbeispiel nach Figur 5, 7 und 9 verschließt die Oberseite des aus dem unterirdischen Raum herausnehmbaren Containers 3 die obere Öffnung des Raumes 2.

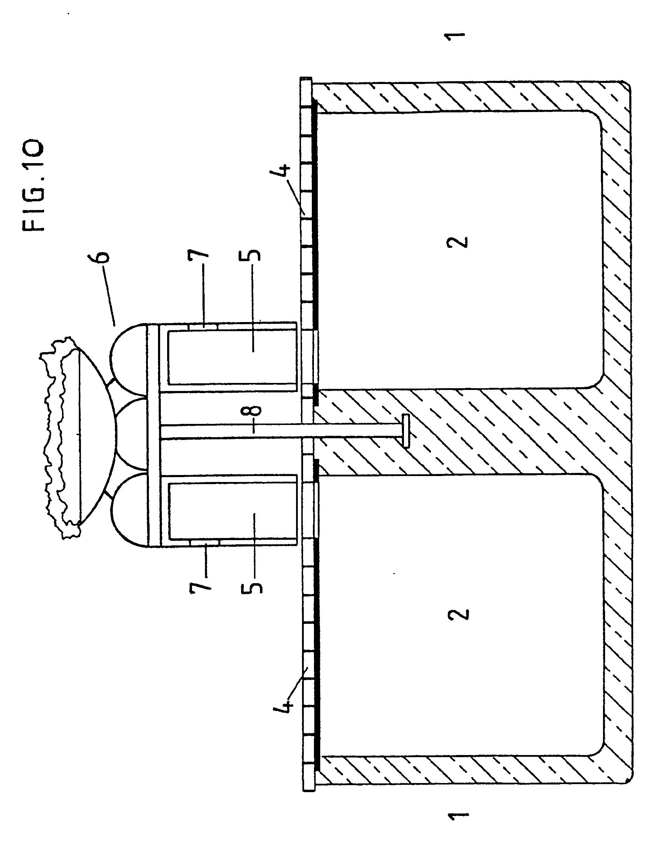

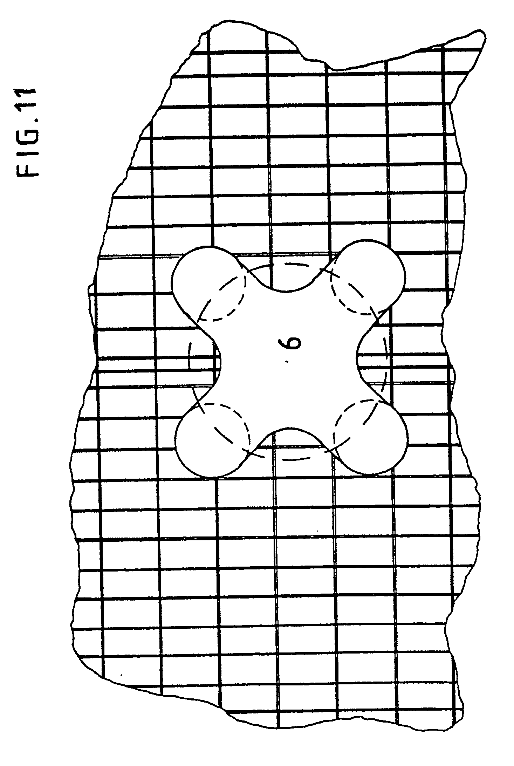

Im Ausführungsbeispiel nach Fig. 10 und 11 sind die Container fest im Boden eingelassen und nicht herausnehmbar, so daß von Aufbewahrungsräumen gesprochen werden kann, die durch eine zusätzliche Saugvorrichtung entsaugt werden.

Im Ausführungsbeispiel nach Fig. 10 und 11 bleibt das überirdische Prinzip mit zusammenhängender, verdrehbarer oder abnehmbarer Schachteinheit erhalten. Demgegenüber gibt es keinen herausnehmbaren, vom unterirdisehen Raum separaten Container mehr, der überirdisch entsorgt werden muß. Der unterirdisch ausgehobene Raum und ausbetonierte Raum bildet einen Container für sich unter Ausnutzung aller verfügbaren und nutzbaren Maße. Entsorgt wird durch Verdrehung der überirdisch sich befindenden Schachteinheit, wodurch die Bodenöffnung zum unterirdischen Raum frei wird. Nun wird durch einen Saugapparat der Inhalt des "Containers" abgesaugt.

Dieses System bietet neben den vorher beschriebenen weitere Vorteile :

– geringere Kosten (kein zusätzlicher Behälter)
– leichtere Handhabung (Drehen und Saugen)
– weniger Störfaktoren bei der Entsorgung
– weniger Arbeitsaufwand (leicht von einer Person ausführbar)
– Dauer der Lärmbelästigung bei der Entsorgung und beim Füllen des Containers minimal
– durch gute Gestaltung der Schachteinheit städtebaulich von Vorteil und mit anderen öffentlichen Funktionen kombinierbar.

## Ansprüche

1. Einrichtung mit Containern zur Aufnahme von verwertbaren Stoffen wie Glas, Papier, Metall mit unter der Oberfläche der Erde oder des Gehbereichs nach oben verschließbaren Räumen (2), in denen Container (3) einliegen oder die die Container bilden und zu denen von oberhalb der Oberfläche angeordneten Einfüllöffnungen (7) Schächte führen, **dadurch gekennzeichnet,** daß die zu diesen Containern führenden Schächte (5) über der Oberfläche zu einem einzigen Entsorgungskörper zusammengefaßt sind, und daß die Schächte (5) bzw. der Entsorgungskörper gegenüber den Containern (3) verschiebbar oder verdrehbar ist bzw. sind.

2. Einrichtung nach Anspruch 1, **dadurch gekennzeichnet,** daß der Einfüllschacht (5) außermittig am Container (3) oberhalb angeordnet ist.

3. Einrichtung nach Anspruch 1 oder 2, **dadurch gekennzeichnet,** daß jeder Schacht (5) am Container (3) oben angeformt ist.

4. Einrichtung nach einem der vorherigen Ansprüche, **dadurch gekennzeichnet,** daß die Schächte (5) von den Containern (3) abnehmbar sind.

5. Einrichtung nach einem der vorherigen Ansprüche, **dadurch gekennzeichnet,** daß der Entsorgungskörper als Werbesäule, Kiosk, Informationsstelle, Blumenschale und/oder Plastik gestaltet ist.

6. Einrichtung nach einem der vorherigen Ansprüche, **dadurch gekennzeichnet,** daß die Oberseite des aus dem unterirdischen Raum herausnehmbaren Containers (3) die obere Öffnung des Raums (2) verschließt.

## Claims

1. Installation with containers for reception of exploitables materials like glasses, papers, metalls with underground or under pavements situated spaces (2), which are closables above, spaces in which containers (3) are put in or which are the containers, to which shafts lead, from overground situated fill-in-openings (7), in a device for use, that the shafts (5) leading to these containers are concentrated over the earth to one single waste-removalobject and that the shafts (5) or the single waste-removal-object is or are displacable/s or turnable/s to the containers (3).

2. Installation following claim 1, in a device for use, that the the fill-in-shaft (5) is located out of the center of the container (3) on its surface.

3. Installation following claim 1 or 2, in a device for use, that each shaft (5) is formed on the top of the container (3).

4. Installation following one of the preceding claims, in a device for use, that the shafts (5) can be detached from the containers (3).

5. Installation following one of the preceding claims, in a device for use, that the waste-removal-object is created or built like a publicity column, a kiosk, an information point, a flower-bucket and/or a sculpture.

6. Installation following one of the preceding claims, in a device for use, that the top-side of the container (3), which is removable from the underground, closes up the upper opening of the space (2).


**Revendications**

1. Installation avec conteneurs pour la réception de matières récupérables tant que verres, papiers, métaux, avec des espaces 2 situés sous la surface de la terre ou sous les trottoirs, espaces refermables vers le haut dans lesquels sont déposés des conteneurs (3) ou qui eux-mêmes constituent les conteneurs et vers lesquels mènent des gaines depuis des orifices de remplissage(7) situés audessus de la surface de la terre, installation caracterisée par le fait que les gaines (5) menant vers les conteneurs sont compris, au dessus de la terre, en un seul corps de décharges et que les gaines (5) ou le corps de décharges sont ou est déplacable(s) et tournant(es) vis-à-vis des conteneurs.(3)

2. Installation suivant revendication 1, caracterisée par le fait, que la gaine de remplissage (5) est situé excentriquement sur le haut du conteneur.(3)

3. Installation suivant revendication 1 ou 2, caracterisée par le fait, que chaque gaine (5) est modelée sur le haut du conteneur (3).

4. Installation suivant une des revendications précédentes, caracterisée par le fait que les gaines (5) sont détachables des conteneurs (3).

5. Installation suivant une des revendications précédentes, caracterisée par le fait que le corps de décharge est formé en colonne publicitaire, kiosque, point d'information, bac à fleurs et/ou sculpture.

6. Installation suivant une des revendications précédentes, caracterisée par le fait que la surface supérieure du conteneur (3), prélèvable de l'espace souterrain, obture l'ouverture supérieure de cet espace (2).

FIG.1

FIG. 2

FIG. 3

FIG.4

EP 0 252 437 B1

FIG. 5

FIG. 6

EP 0 252 437 B1

FIG. 7

EP 0 252 437 B1

FIG.8

EP 0 252 437 B1

FIG.9

EP 0 252 437 B1

FIG.10

FIG.11

EP 0 252 437 B1